# EUROPEAN PATENT APPLICATION

(11) **EP 0 772 005 A1**
(43) Date of publication of application: **07.05.1997**
(21) Application number: 96203040.9
(22) Date of filing: 31.10.1996
(51) Int. Cl.: F24D 3/14

(54) **Insulating plate**

(30) Priority: 01.11.1995 NL 1001549
(71) Applicant: Vapotherm B.V., 2401 LP Alphen a/d Rijn (NL)
(72) Inventor: Blaauw, Jan Alle, 9606 PZ Kropswolde (NL)
(74) Representative: Smulders, Theodorus A.H.J., Ir.

(57) **Abstract**

An insulating plate (1) manufactured from foamed material, which plate has at least one side provided with a cover layer (3) of diffusion-impervious material and further has at least one holding layer (5) for insert fastening members. The plate has an open web (5) of a material having relatively long tough fibers, which web is provided on at least one side between the diffusion-impervious cover layer (3) and the foamed material (2).

## Description

The invention relates to an insulating plate manufactured from foamed material and having at least one side provided with a cover layer of diffusion-impervious material and further having at least one holding layer for insert fastening members.

The invention further relates to a method for manufacturing such an insulating plate and to an assembly comprising an insulating plate and one or more pipes mounted thereon.

Such insulating plates are known from practice. The known insulating plates are for instance used as underlayer for tubes or hoses of floor-heating installations. Known are insulating plates consisting of a layer of polyurethane foam provided on either side with a diffusion-impervious layer, such as an aluminum layer. The diffusion-impervious layer prevents the escape of pentane from the polyurethane foam. This is important for maintaining the insulating value.

For fixing the pipes required for a floor-heating installation on the underlayer of insulating plates, insert clips are normally used, which are U-shaped and have one or two legs provided with barbs or the like, capable of being inserted into the insulating plate across a floor-heating pipe. Because the foam material and the aluminum layer are often not strong enough to hold the insert clips against the stresses prevailing in the heating pipes, it is known to laminate the aluminum layer with a firm plastic film, such as for instance a HDPE-film of a thickness of, for instance, 70 µm. Such a film is sufficiently tenacious to hold the insert clips.

A problem occurring with insulating plates of the above-described type is that increasingly thick plates are used. During the production of such thick plates, a relatively high temperature occurs, causing the HDPE-film to become detached from the aluminum layer. This of course also causes the loss of the holding force for the insert clips. It is true that his problem does not occur with specific types of HDPE-film or only to a much lesser degree, but those types of film cannot be used for other reasons, such as for instance the fire standards that have been laid down.

Hence, there is a need for an insulating plate for use as underlayer for floor heating which can be manufactured in relatively great thicknesses and that can nevertheless exert an adequate holding force on insert clips.

It is the object of the invention to satisfy the above-outlined need. To this end, according to the invention, an insulating plate of the above-described type is characterized by an open web of a material having relatively long tough fibers, which web is provided on one side between the diffusion-impervious cover layer and the foamed material.

A method for manufacturing an insulating plate, wherein a carrier band is fed on a bottom conveyor, a foaming material is sprayed on the carrier band in a spraying station, and directly after the spraying station, a band of cover layer material is fed on the foaming material and between the foaming material and a top conveyor, which top conveyor extends substantially parallel to the bottom conveyor, is characterized in that simultaneously with the carrier band and/or the band of cover layer material, on the side thereof facing the foaming material, a material band formed by an open web is fed.

It is observed that German patent 2,849,805 discloses an insulating plate which has one of its surfaces provided with a mesh manufactured from metal wire or plastic thread. The mesh serves to retain the barbs of the legs of fastening clips passed through the mesh into the foam material. However, such a mesh is relatively expensive and could, when a diffusion-impervious metal foil is used, impede an optimum adhesion of the metal foil to the foam mass, depending on the mesh size of the mesh.

It is further observed that British patent application 2,204,530 discloses a plate material manufactured from plastic foam and having a cover layer and an intermediate layer provided between the cover layer and the foam material. The intermediate layer consists of long fibers and has an open structure, but is not a thin layer, but a three-dimensional configuration. This known three-dimensional configuration serves to establish an even distribution of gas bubbles released from the foam material, and is not suitable for holding insert clips.

Hereinafter, the invention will be further described with reference to the accompanying drawing, wherein:
Fig. 1 schematically shows, in cross section, an example of a part of an insulating plate according to the invention;
Fig. 2 schematically illustrates the configuration of the threads of a web to be used in an insulating plate according to the invention; and
Fig. 3 schematically shows an apparatus for manufacturing an insulating plate according to the invention.

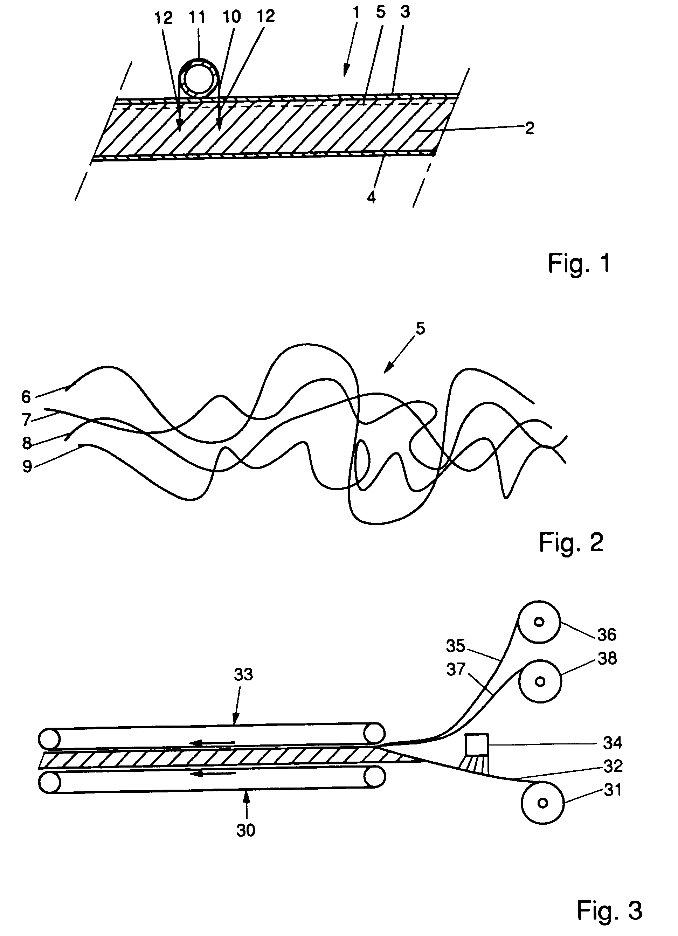

Fig. 1 schematically shows, in cross section, a part of an insulating plate 1 according to the invention. The insulating plate shown is manufactured from a suitable foam material, preferably polyurethane foam 2, and in this example, the plate is on two sides provided with an aluminum layer 3, 4. Provided between at least one of the aluminum layers and the foam material is an open web 5 of long-fiber material, shown schematically. It has been found that suitable material is polyester web. Such polyester web is relatively open, permitting the foam to properly adhere to the aluminum layer, and consists of long, tough fibers, constituting a proper hold for the insert clips, such as clip 10. The clip holds a heating pipe 11, and in this example has two legs provided with barbs 12.

It is observed that it is surprising that polyester web can be used in the manner described, because the polyester web is fitted directly during the production of the foam plate and is hence exposed to the high temperatures occurring during the production. It is known that polyester exhibits a shrinkage different from polyurethane so that when these materials are processed together, a non-flat insulating plate is formed. However, tests have demonstrated that this problem hardly presents itself, if at all, when it is used in an insulating plate provided with a diffusion-impervious layer of, for instance, aluminum.

An example of the configuration of polyester threads 6-9 in a suitable web 5 is schematically shown in Fig. 2. Such a web is sufficiently open so as not to impede a proper adhesion between the diffusion-impervious layer and the foam material, and is on the other hand sufficiently dense and tough to provide a proper hold for the barbs of fastening clips.

A suitable web is the polyester web marketed by AKZO under the name of COLBACK.

Fig. 3 schematically shows in what manner an insulating plate according to the invention can be manufactured. A diffusion-impervious carrier 32 is fed from a supply roll 31 to a substantially horizontal conveyor 30. Disposed above the first conveyor 30 is a second conveyor 33. Before the carrier 32 reaches the area under the second conveyor, a foaming material, such as polyurethane, is sprayed by means of a suitable spraying installation 34, which material then starts to foam, while the carrier advances. The foaming process is limited in a known manner by the second conveyor, to obtain a plate of uniform thickness.

During the initial stage of the foaming process, a second diffusion-impervious layer 35 of, for instance, aluminum foil is fed from a supply roll 36 or the like to the foaming material, on the top side thereof. Further, from a supply roll 38 or the like, an open web of long, tough fibers, such as for instance a web 37 of polyester threads, is fed between the foam material and the second diffusion-impervious layer.

In the example described, an open web is used on one side only, but it is possible without any problem to provide an open web on the diffusion-impervious carrier 32 as well, upstream of the spraying installation 34.

It is observed that after the foregoing, various modifications readily occur to a skilled person. For instance, the materials mentioned can all be replaced by materials having similar properties. These and similar modifications are understood to fall within the scope of the invention.

## Claims

1. An insulating plate manufactured from foamed material, said plate having at least one side provided with a cover layer of diffusion-impervious material and further having at least one holding layer for insert fastening members,
characterized by an open web of a material having relatively long tough fibers, said web being provided on one side between the diffusion-impervious cover layer and the foamed material.

2. An insulating plate according to claim 1, characterized in that the web is a polyester web.

3. An insulating plate according to claim 1 or 2, characterized in that the foamed material is polyurethane.

4. An insulating plate according to any one of the preceding claims, characterized in that the diffusion-impervious material is a metal foil.

5. An insulating plate according to any one of the preceding claims, characterized in that the diffusion-impervious material is aluminum foil.

6. A method for manufacturing an insulating plate according to any one of the preceding claims, wherein a carrier band is fed on a bottom conveyor, a foaming material is sprayed on the carrier band in a spraying station, and directly after the spraying station, a band of cover layer material is fed on the foaming material and between the foaming material and a top conveyor, said top conveyor extending substantially parallel to the bottom conveyor, characterized in that simultaneously with the carrier band and/or the band of cover layer material, on the side thereof facing the foaming material, a material band formed by an open web is fed.

7. A method according to claim 6, characterized in that the material band formed by an open web comprises a polyester web.

8. An assembly of an insulating plate according to any one of claims 1-5, at least one pipe provided on the insulating plate, and one or more U-shaped clips arranged over the pipe, whose legs have been inserted into the plate and comprise, at substantially the same level, one or more projections capable of catching behind fibers of the web.
